# EUROPEAN PATENT APPLICATION

(11) **EP 2 457 879 A1**
(43) Date of publication of application: **30.05.2012**
(21) Application number: 10802242.7
(22) Date of filing: 16.07.2010
(51) Int. Cl.: C03B 18/02

(54) **HANGER ASSEMBLY AND APPARATUS FOR PRODUCING FLOAT PLATE GLASS**

(30) Priority: 21.07.2009 JP 2009170417
(71) Applicant: Asahi Glass Company, Limited, Tokyo 100-8405 (JP)
(72) Inventor: BAN, Nobuyuki, Tokyo 100-8405 (JP); IGA, Motoichi, Tokyo 100-8405 (JP); HAMASHIMA, Kazuo, Tokyo 100-8405 (JP); HIRABARA, Yasuharu, Tokyo 100-8405 (JP)
(74) Representative: Müller-Boré & Partner Patentanwälte
(86) International application number: PCT/JP2010/062113
(87) International publication number: WO 2011/010622

(57) **Abstract**

A hanger assembly for hanging up a firebrick that forms a ceiling surface in a float bath roof for an apparatus for producing a float plate glass, which hanger assembly comprises a supported member latched on a supporting member by a pin, wherein the supporting member has an extension part that extends in extension direction P, an end part formed by two convex portions having through-holes so that when one pin is inserted into the through-hole of one convex portion, the pin passes through the through-hole of the other convex portion, and a connecting part that connects the extension part and the end part, and the connecting part is tapered so that the dimension of at least a portion thereof becomes larger from the extension part toward the end part.

## Description

### TECHNICAL FIELD

The present invention relates to a hanger assembly, particularly to a hanger assembly for hanging up a firebrick that forms a ceiling surface in a float bath roof of a float bath apparatus for producing a float plate glass.

### BACKGROUND ART

As one process for producing a plate glass, a float process is known. In a such a float process,
(1) molten glass is introduced into a bath accommodating molten tin, so-called a float bath,
(2) on the molten tin, the molten glass is continuously transported from upstream to downstream, and
(3) while cooling, this molten glass is discharged from the float bath, to produce a plate glass.

Usually, at an upper portion of the float bath, a ceiling portion so-called a float bath roof is provided. Such a float bath roof is made of a fire refractory having its lower surface (i.e. the side facing the float bath) engaged with a plurality of hangers, i.e. the float bath roof has a hanging structure. Here, the hangers are supported by a steel member provided at upper portions of the hangers to hang up the hangers.

As a material for the components constituting such hangers, it is proposed to use silicon carbide or silicon nitride (Patent Document 1).

### PRIOR ART DOCUMENT

### PATENT DOCUMENT

Patent Document 1: JP-A-6-239631

### DISCLOSURE OF INVENTION

### TECHNICAL PROBLEM

Such a hanger is, for example, constituted by an assembly of a plurality of members. For example, a hanger is constituted by a supporting member and a supported member on the downside of the supporting member, which are connected by a connecting pin. The supporting member is made of e.g. a nickel base alloy such as an inconel alloy. And, the supported member and the connecting pin are made of silicon carbide or silicon nitride. Further, the supporting member of the hanger assembly is required to support the supported member and further a firebrick, and in use, a high stress at a high temperature will be loaded thereon.

In recent years, the need for a plate glass of a composition so-called alkali-free glass to be used for e.g. display devices such as liquid crystal panels has been expanding. However, such a plate glass has a high melting point in many cases, and the surface temperature of the float bath to be used for producing such a plate glass tends to increase. Further, along with such a trend, the temperature at which the hanger assembly is exposed, also tends to increase.

Accordingly, an environment to which the hanger assembly, particularly the supporting member, is exposed, tends to be increasingly severe, and therefore, a danger for damage or breakage of the supporting member tends to increase.

The present invention has been made in view of such a problem, and it is an object of the present invention to provide a hanger assembly which can be used stably over a long period of time. Further, another object is to provide an apparatus for producing a float plate glass, which has such a hanger assembly.

### SOLUTION TO PROBLEM

The present invention provides a hanger assembly for hanging up a firebrick that forms a ceiling surface in a float bath roof for an apparatus for producing a float plate glass, which hanger assembly comprises a supporting member, a supported member and a pin latching the supporting member and the supported member, wherein the supporting member has an extension part that extends in extension direction P, an end part formed by two convex portions having through-holes so that when one pin is inserted into the through-hole of one convex portion, the pin passes through the through-hole of the other convex portion, and a connecting part that connects the extension part and the end part, and the connecting part is tapered so that the dimension of at least a portion thereof becomes larger from the boundary with the extension part toward the boundary with the end part.

Further, the present invention provides an apparatus for producing a float plate glass, which comprises a float bath to accommodate molten tin therein, and a float bath roof having a ceiling surface formed by a firebrick hung up by a hanger assembly, wherein the hanger assembly is constituted by the hanger assembly having the above-described characteristics.

### ADVANTAGEOUS EFFECTS OF INVENTION

According to the present invention, it is possible to provide a hanger assembly which can be used stably over a long period of time and which is suitable for hanging up a firebrick of a float bath roof of a float bath apparatus in an apparatus for producing a float plate glass. Further, by using such a hanger assembly, it is possible to provide an apparatus for producing a float plate glass, which can be operated to produce a float plate glass stably over a long period of time.

### BRIEF DESCRIPTION OF DRAWINGS

Fig. 1 is a cross-sectional view schematically illustrating an example of a float bath apparatus for an apparatus for producing a float plate glass.
Fig. 2 is a cross-sectional view illustrating an example of a hanger assembly.
Fig. 3 is a view schematically illustrating a shape of a supporting member of a conventional hanger assembly.
Fig. 4 is a view schematically illustrating a shape of a supporting member of a hanger assembly by the present invention.
Fig. 5 is a view schematically illustrating an example of a tapered shape of a connecting part of the supporting member.
Fig. 6 is a view schematically illustrating another example of a tapered shape of a connecting part of the supporting member.
Fig. 7 is a view illustrating another shape of the supporting member of the hanger assembly of the present invention.
Fig. 8 is a view illustrating still another shape of the supporting member of the hanger assembly of the present invention.
Fig. 9 is a view illustrating still another shape of the supporting member of the hanger assembly of the present invention.

### DESCRIPTION OF EMBODIMENTS

Now, the present invention will be described in detail with reference to the drawings.

Firstly, a common apparatus for producing a float plate glass and a common hanger assembly will be briefly described.

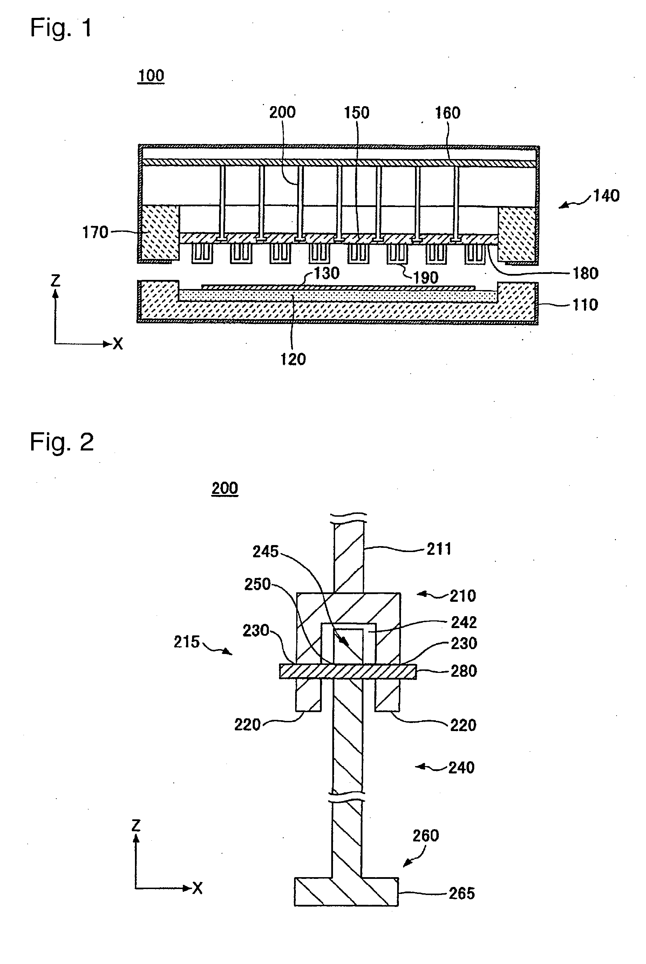

Fig. 1 is a cross-sectional view schematically illustrating an example of a conventional common apparatus for producing a float plate glass. Further, Fig. 2 is a cross-sectional view schematically illustrating an example of a hanger assembly to be used for the apparatus for producing a float plate glass in Fig. 1.

As shown in Fig. 1, a float bath apparatus 100 for an apparatus for producing a float plate glass comprises a float bath 110 and a float bath roof 140 provided above the float bath 110. Hereinafter, a float bath apparatus portion which becomes a region for forming a plate glass in a series of apparatus for producing a float plate glass will be referred to as an apparatus for producing a float plate glass or a float bath apparatus.

Inside of the float bath 110, molten tin 120 is accommodated. On the molten tin 120, molten glass 130 is supplied, and this molten glass 130 moves in a glass ribbon form from upstream towards downstream while its thickness is being adjusted. In the example in Fig. 1, the molten glass 130 moves in a direction perpendicular to the plane of paper (this direction will be hereinafter referred to also as the Y-direction). Therefore, Fig. 1 corresponds to a cross-sectional view when the apparatus 100 for producing a float plate glass is viewed from the direction in parallel to the travelling direction (Y-direction) of the molten glass 130.

The float bath roof 140 comprises a plurality of hanger assemblies 200 extending in a substantially vertical direction (Z-direction in Fig. 1), a firebrick 150 hung at the lower ends of the hanger assemblies 200, and a steel member 160 which supports the upper ends of the hanger assemblies 200. Further, side portions of the float bath roof 140 are constituted by side walls 170 made of a firebrick.

The firebrick 150 hung by the hanger assemblies 200 is two-dimensionally disposed to be uniform in a horizontal direction (X-direction and Y-direction) thereby to form a ceiling surface 180 of the float bath roof 140. This ceiling surface 180 is provided with a plurality of heaters 190 along the direction (X-direction in Fig. 1) substantially perpendicular to the travelling direction of the molten glass 130. In a real apparatus 100 for producing a float plate glass, the construction as shown in Fig. 1 is repeated at a plurality of Y-coordinate positions along the travelling direction (Y-direction) of the molten glass 130.

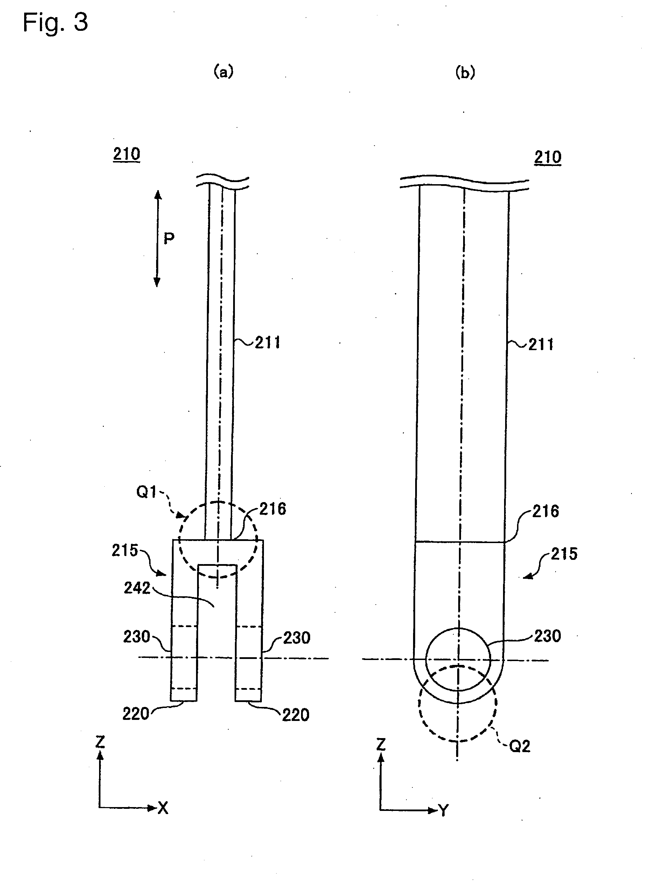

Now, the construction of the conventional common hanger assembly 200 will be described in detail with reference to Figs. 2 and 3. Fig. 2 is a schematic cross-sectional view of a typical hanger assembly 200 to be used for hanging up a firebrick of the float bath roof of the apparatus 100 for producing a float plate glass. Further, Fig. 3 shows a common shape of a supporting member 210 of the hanger assembly 200. Fig. 3(a) is a schematic view illustrating the supporting member 210 as viewed in the same direction as in Fig. 2 i.e. in the Y-direction, and Fig. 3(b) is a schematic view illustrating the supporting member 210 as viewed from the X-direction in Fig. 3(a).

As shown in Fig. 2, the hanger assembly 200 is constituted by the supporting member 210, the supported member 240 and the pin 280.

As shown in Fig. 3, the supporting member 210 is constituted by an extension part 211 that extends in extension direction P and two end parts that are located at both ends of the extension part 211. One end part 215 of the supporting member 210 has two convex portions 220 and is formed to have a reversed U-shape. Between the two convex portions 220, a space 242 is provided with such a size that the supported member 240 can be inserted therein. Further, the two convex portions 220 are respectively provided with through-holes 230, so that a single pin 280 can pass therethrough in a horizontal direction (X-direction in Fig. 2). The extension part 211 and the end part 215 of the supporting member 210 are bonded at a boundary 216. Further, the other end part of the supporting member 210 is connected to the above-mentioned steel member 160 (not shown in Figs. 2 and 3).

Referring again to Fig. 2, the supported member 240 extends coaxially with the supporting member 210 (Z-direction in Fig. 2). The supported member 240 is in such a form that it is inserted between the convex portions (i.e. in the space 242) of the supporting member 210. For example, in the example in Fig. 2, the first end 245 of the supported member 240 has a diameter equal to the diameter of the extending portion of the supported member 240, and this diameter is narrower than the distance between the convex portions 220 of the supporting member 210.

Further, the first end 245 of the supported member 240 has a through-hole in which the pin 280 passes through. This through-hole 250 is formed so that when the first end 245 of the supported member 240 is inserted in the space 242 between the convex portions 220 of the supporting member 210, and the pin 280 is inserted through the through-hole 230 formed in one convex portion 220, the pin 280 will just pass through the through-hole 250 and pass through the through-hole 230 formed in another convex portion 220 of the end 215 of the supporting member 210. Thus, by letting the pin 280 pass through the respective through-holes 230 and 250 of the supporting member 210 and the supported member 240, the supporting member 210 and the supported member 240 are integrated to constitute a hanger assembly 200.

The second end 260 of the supported member 240 is, for example, in such a form that a rectangular parallelepiped hook member 265 is provided, and on this hook member 265, the above-mentioned firebrick 150 is to be hooked.

Thus, at its end part 215, the supporting member 210 of the hanger assembly 200 supports the supported member 240 and further the firebrick 150, and at the time of use, the supporting member 210 of the hanger assembly 200 receives a load of high stress at a high temperature (e.g. from 700°C to 1,200°C). Therefore, as the material for the supporting member 210, a nickel base alloy such as inconel may, for example, be used which has good high temperature creep resistance properties.

However, in recent years, the need for a plate glass of a composition so-called alkali-free glass to be used for e.g. display devices such as liquid crystal panels has been expanding. Such a plate glass has a high melting point in many cases, and the surface temperature of the float bath to be used for producing such plate glass tends to increase. Along with such a trend, the temperature at which the hanger assembly is exposed, also tends to increase. Accordingly, the environment to which the supporting member 210 is exposed tends to be increasingly severe, and even in a case where a nickel base alloy is used as the supporting member 210, such a danger that the supporting member is damaged or broken, is likely in the future.

Here, such a breakage of the supporting member 210 is likely to occur with a region Q1 (boundary portion 216) in Fig. 3 as the starting point. In such a region Q1, the stress is likely to be locally concentrated in a small area.

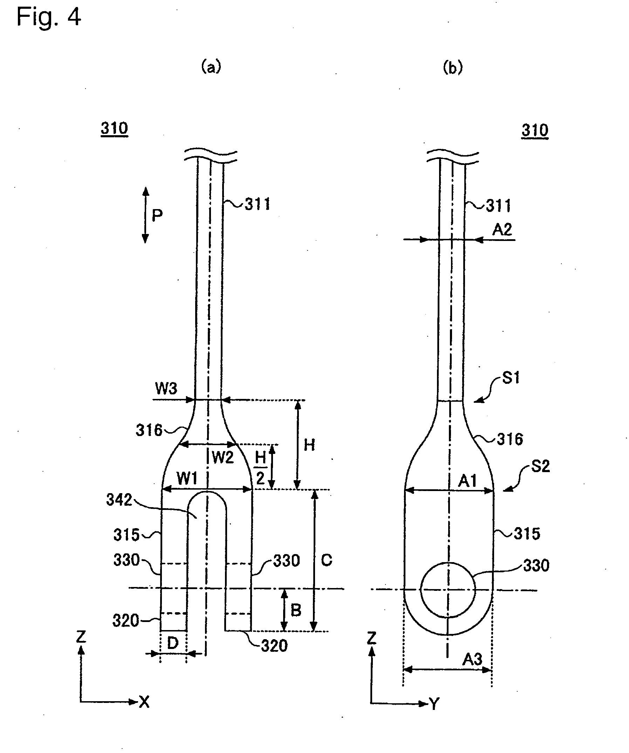

Whereas, in the present invention, a supporting member 310 having a structure shown in Fig. 4 is used as a supporting member of the hanger assembly 200.

Fig. 4 schematically illustrates the structure of the supporting member 310 of the hanger assembly 200 according to the present invention. Fig. 4(a) is a schematic view when the supporting member 310 is viewed in the same direction as in Fig. 3(a) i.e. in the Y-direction, and Fig. 4(b) is a schematic view when the supporting member 310 is viewed in the X-direction in Fig. 4(a).

The supporting member 310 according to the present invention comprises an extension part 311 that extends in extension direction P (i.e. a longitudinal axis part that extends in vertical direction P), a connecting part 316 and two end parts. One end part 315 of the supporting member 310 is integrated with the extension part 311 by the connecting part 316. Further, the other end part (not shown in Fig. 4) of the supporting member 310 is connected to the above-mentioned steel member 160, and the structure of this portion is the same as a conventional one. Therefore, one end part 315 of the supporting member 310 will be hereinafter referred to simply as "the end part 315".

Like the above-described end part 215 of the supporting member 210, the end part 315 is formed of two convex portions 320 and a space 342 between the two convex portions 320. In the same space 342, the above-described supported member 240 is inserted. Further, the two convex portions 320 are respectively provided with through-holes 330, so that the above-described pin 280 can pass therethrough in a horizontal direction (X-direction in Fig. 4).

The connecting part 316 has a role to integrate the extension part 311 and the end part 315. That is, the extension part 311 and the end part 315 are connected by the connecting part. The connecting part 316 has a boundary S1 with the extension part 311 and a boundary S2 with the end part 315 and has a tapered shape. In other words, the connecting part 316 has the thickness in the X-direction, and the width in the Y-direction in Fig. 4 increased from the boundary S1 towards the boundary S2. That is, the above connecting part is tapered so that the dimension in at least one direction among the X- and Y-directions perpendicular to the extension direction P increases.

Here, it is necessary to pay attention that the "tapered shape" includes not only a shape wherein the thickness in the X-direction and/or the width in the Y-direction linearly increase from the boundary S1 towards the boundary S2 (see Fig. 4) but also a shape wherein the thickness in the X-direction and/or the width in the Y-direction increases non-linearly. That is, the connecting part 316 may have such a shape that the thickness in the X-direction and/or the width in the Y-direction increases simply, gradually or stepwisely from the boundary S1 towards the boundary S2.

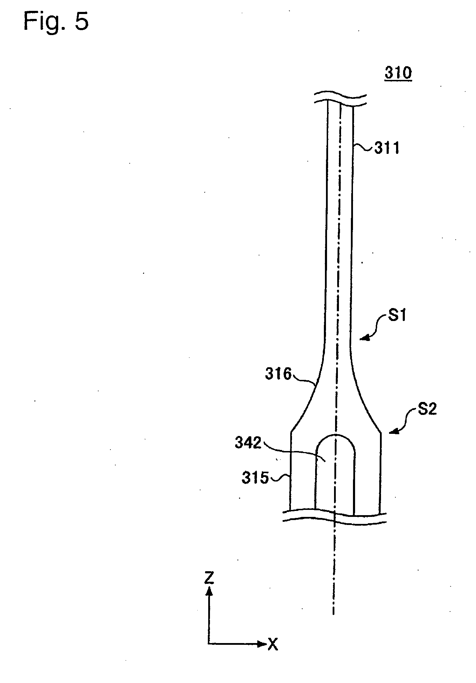

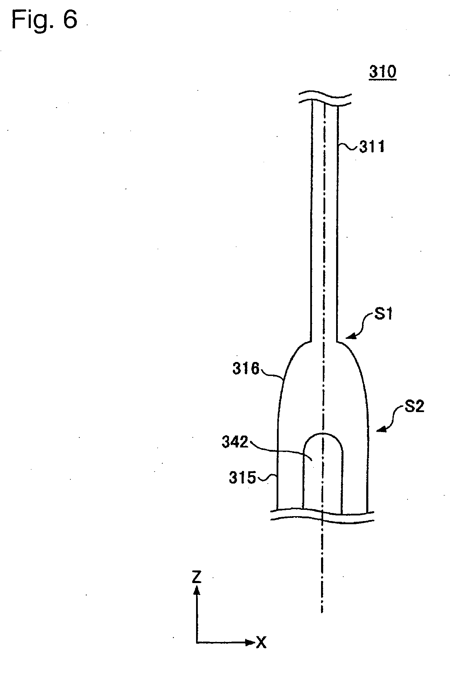

For example, the connecting part 316 may have a shape as shown in Fig. 5 or 6.

In Fig. 5, the connecting part 316 flares out in a "horn shape" from the boundary S1 towards the boundary S2. Whereas, in Fig. 6, the connecting part 316 flares out in an "umbrella shape" from the boundary S1 towards the boundary S2.

The connecting part 316, the extension part 311 and the end part 315 of the supporting member 210 are preferably produced as a continuous body by integral casting, but in some cases, the extension part 311, the end part 315 and the connecting part 316, or the extension part 311 and the end part 315 having the connecting part 316 formed, or the end part 315 having the connecting part 316 formed, and the extension part, may be bonded by a welding means or other bonding means for integration.

Here, the supporting member 310 according to the present invention is substantially different in the following points, as compared with the above-mentioned conventional supporting member 210.

The supporting member 310 according to the present invention has no stress concentration portion (the boundary portion 216) as in the conventional supporting member 210, between the extension part 311 and the end part 315. Instead, the supporting member 310 according to the present invention has a tapered connecting portion 316 at the same position. Here, the extension part 311 may be a round bar (circular cylinder) or an angular bar (square pole), but in consideration of integration with the connecting part 316 and the end part 315, it is preferably an angular bar.

By such characteristics, with the supporting member 310 according to the present invention, it is possible to avoid concentration of a stress at a boundary portion between the extension part 311 and the end part 315.

Accordingly, by the hanger assembly having the supporting member 310 of the present invention, it is possible to significantly suppress a danger of damage or breakage starting from the region Q1 during the use of the supporting member. Therefore, in the present invention, it becomes possible to provide a supporting member and further a hanger assembly, that can be stably used over a long period of time even when the environment of usage becomes a severe environment. The supporting member 310 is preferably made of a nickel base alloy such as an inconel alloy excellent in high temperature characteristics such as heat resistance, corrosion resistance, creep resistance, etc. Further, the supporting member 310 is preferably produced by a casting method, whereby a defect is less likely to be formed.

Further, in the structure of the conventional supporting member 210, a region Q2 (downside of the through-holes 230) in Fig. 3 is also susceptible to concentration of a stress, and it is likely that breakage of the supporting member 210 takes place with this region Q2 as the starting point.

Therefore, in the supporting member 310 according to the present invention, it is preferred that the distance B (see Fig. 4) from the center of the through-holes to the forward end of the end part 315 of the supporting member is made long as compared with the conventional supporting member 210. It is thereby possible to prevent a crack started from the through-holes 330 from reaching the forward end of the supporting member.

Further, for the same reason, it is preferred that the entire length D (see Fig. 4) of a through-hole 330 provided in each convex portion 320 i.e. the thickness in the X-direction of each convex portion 320, is made to be as thick as possible. Further, preferred dimensional ranges of the respective portions of the supporting member 310 according to the present invention, are as follows. Here, the following dimensions correspond to the respective reference symbols in Fig. 4(a) and Fig. 4(b).
· Dimension A1 (the upper width of the end part 315 in a direction perpendicular to the extension direction of the through-holes 330, i.e. the width in the Y-direction of the upper side of the end part 315): from 20 mm to 70 mm, preferably from 20 mm to 50 mm, further preferably from 25 mm to 40 mm. (If A1 exceeds 70 mm, the surrounding firebrick decreases, whereby the thermal insulation properties tend to deteriorate.)
· Dimension A2 (the width of the extension part 311 in a direction perpendicular to the extension direction of the through-holes 330, i.e. the maximum width in the Y-direction of the extension part 311): from 3 mm to 30 mm, preferably from 10 mm to 30 mm, further preferably from 15 mm to 25 mm.
· Dimension A3 (the width in the Y-direction on the downside of the end part 315): from 20 mm to 70 mm, preferably from 20 mm to 50 mm, further preferably from 25 mm to 40 mm. (If A3 exceeds 70 mm, the surrounding firebrick decreases, whereby the thermal insulation properties tend to deteriorate.)
· Dimension B (the distance from the center of the through-hole 330 to the forward end of the end part 315): from 10 mm to 50 mm, preferably from 10 mm to 40 mm, further preferably from 20 mm to 30 mm.
· Dimension C (the entire length of the end part 315 in the extension direction P of the extension part 311): from 20 mm to 80 mm, preferably from 40 mm to 60 mm.
· Dimension D (the thickness of one convex portion 320 in the end part 315, i.e. the length of the through-hole): from 3 mm to 25 mm, preferably from 3 mm to 15 mm, further preferably from 5 mm to 9 mm. (If D exceeds 25 mm, the space 342 between the two convex portions 320 becomes narrow, whereby it becomes difficult to insert the supported member 240.)
· Dimension H (the entire length of the connecting part 316 represented by the distance between the above-mentioned two boundaries, in the extension direction P of the extension part 311): from 20 mm to 100 mm, preferably from 50 mm to 80 mm.
· Dimension W1 (the thickness in a direction parallel to the extension direction of the through-holes, of the boundary between the connecting part 316 and the end part 315 of the extension part 311, i.e. the maximum thickness in the X-direction of the connecting part 316 (the thickness at the boundary S2 between the connecting part 316 and the end part 315)): from 20 mm to 70 mm, preferably from 20 mm to 50 mm, further preferably from 25 mm to 35 mm.
· Dimension W2 (the thickness in the X-direction at a position of 1/2 of the entire length H of the connecting part 316): from 11.5 mm to 50 mm, preferably from 10 mm to 35 mm, further preferably from 15 mm to 25 mm. (Provided that it represents a dimension in a case where the connecting part 316 is linearly tapered.)
· Dimension W3 (the thickness in a direction parallel to the extension direction of the through-holes, of the boundary between the connecting part 316 and the extension part 311, i.e. the minimum thickness in the X-direction of the connecting part 316 (the thickness at the boundary S1 between the connecting part 316 and the extension part 311)): from 3 mm to 30 mm, preferably from 3 mm to 15 mm, further preferably from 5 mm to 10 mm.

By forming the supporting member 310 with such dimensions, it is possible to obtain a supporting member which is scarcely susceptible to breakage in a high stress load environment at a high temperature. Accordingly, the hanger assembly having such a supporting member 310 can be used stably over a long period of time even in a process for producing a float plate glass having a high melting point, such as alkali-free glass:

Further, the supported member 240 may be made of a silicon carbide material containing silicon carbide as the main component, or a silicon nitride material containing silicon nitride as the main component.

### SECOND CONSTRUCTION

Now, another construction example of the supporting member for a hanger assembly according to the present invention will be described.

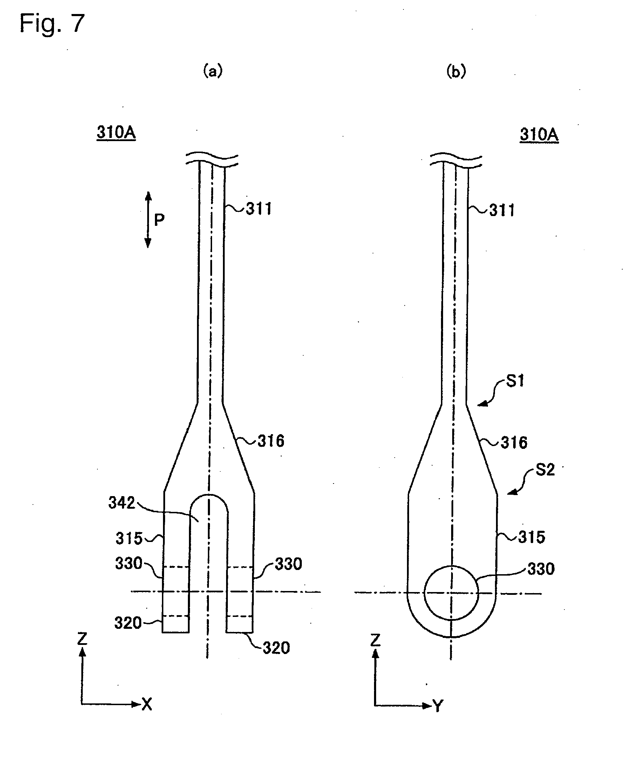

Fig. 7 shows another supporting member for a hanger assembly according to the present invention. This supporting member 310A basically has a shape similar to the supporting member 310 shown in Fig. 4. However, the supporting member 310A is different from the supporting member 310 shown in Fig. 4 in that the extension part 311 is in a circular rod shape. That is, in the supporting member 310A, the cross-section perpendicular to the direction P of the extension part 311 is substantially circular.

It is apparent to those skilled in the art that even with such a shape of the supporting member, the stress concentration at the boundary S2 can be relaxed, and the above-described effects of the present invention can be obtained.

### THIRD CONSTRUCTION

Now, still another construction example of the supporting member for a hanger assembly according to the present invention will be described.

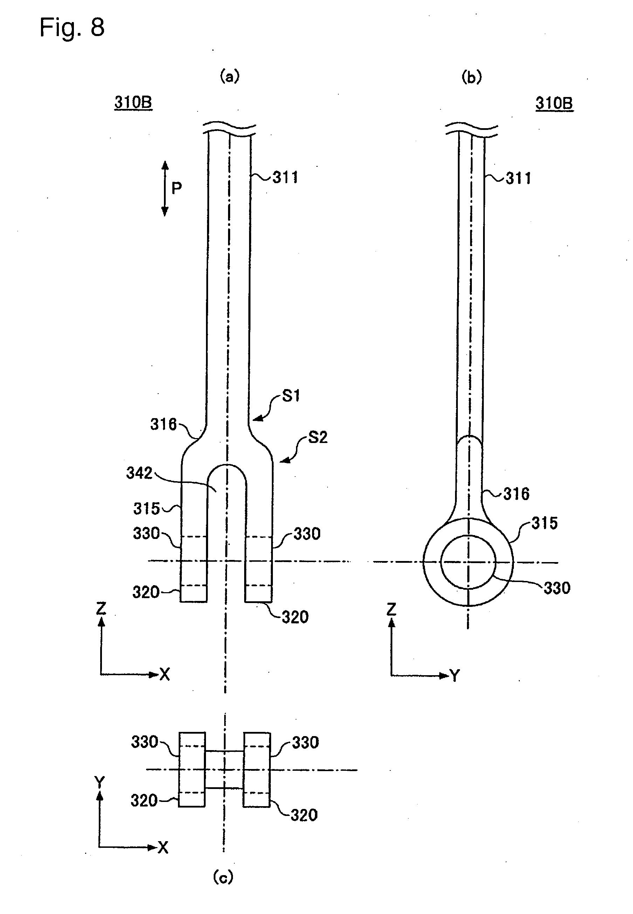

Fig. 8 shows another supporting member for a hanger assembly according to the present invention. This supporting member 310B basically has a shape similar to the supporting member 310 shown in Fig. 4. However, the supporting member 310B is substantially different from the supporting member 310 shown in Fig. 4 in that as viewed in the X-direction in Fig. 8, the end part 315 is in a ring shape. That is, in this example, the end part 315 has a substantially concentric shape with the through-holes 330. Further, in the supporting member 310B in Fig. 8, as viewed in the Y-direction, the connecting part 316 is in a curved shape.

It is apparent to those skilled in the art that even with such a shape of the supporting member, the stress concentration at the boundary S2 can be relaxed, and the above-described effects of the present invention can be obtained.

### FOURTH CONSTRUCTION

Now, still another construction example of the supporting member for a hanger assembly according to the present invention will be described.

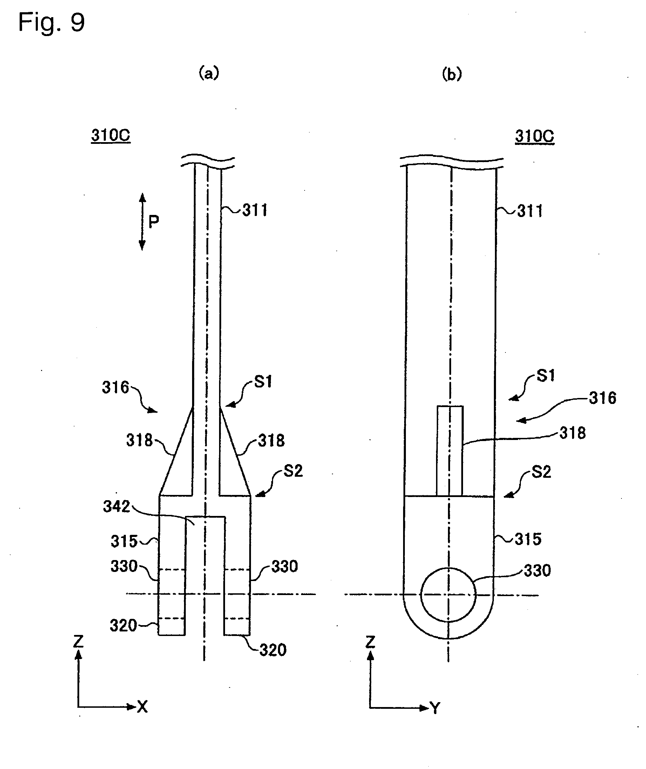

Fig. 9 shows another supporting member for a hanger assembly according to the present invention. This supporting member 31 0C basically has a shape similar to the supporting member 310 shown in Fig. 4. However, the supporting member 310C is substantially different from the supporting member 310 shown in Fig. 4 in that the connecting part 316 has rib members 318. That is, in this example, the connecting part 316 is not constructed so that the thickness in the X-direction and the width in the Y-direction flare from the boundary S1 towards the boundary S2. Instead, the connecting part 316 is constructed so that, as viewed from the Y-direction, substantially triangular two rib members 318 are disposed in a mirror symmetry on the upper side of the boundary S2.

More specifically, each rib member 318 is formed in the connecting part 316, so that as viewed in the Y-direction, the bottom of the triangle is in contact with the boundary S2, and one side of the triangle is in contact with the center portion 317 of the connecting part 316. Thus, in this construction, not the entire connecting part 316, but only a part thereof constitutes a tapered shape.

It is apparent to those skilled in the art that even with such a shape of the supporting member, the stress concentration at the boundary S2 can be relaxed, and the above-described effects of the present invention can be obtained.

In the foregoing, construction examples of the supporting member for a hanger assembly according to the present invention have been described. However, it is apparent to those skilled in the art that in addition to the above examples, various embodiments are included in the hanger assembly and its supporting member according to the present invention.

### INDUSTRIALAPPLICABILITY

According to the present invention, it is possible to reduce a danger of damage or breakage and improve the heat resistance and creep resistance properties of the supporting member of a hanger assembly for hanging up a firebrick that forms a ceiling surface in a float bath roof of a float bath apparatus, and it is possible to produce plate glass stably over along period of time. The present invention is particularly useful for producing plate glass where formation of plate glass at a higher temperature is required.

The entire disclosure of Japanese Patent Application No. 2009-170417 filed on July 21, 2009 including specification, claims, drawings and summary is incorporated herein by reference in its entirety.

### REFERENCE SYMBOLS

- 100:: Apparatus for producing float plate glass
- 110:: Float bath
- 120:: Molten tin
- 130:: Molten glass
- 140:: Float bath roof
- 150:: Firebrick
- 160:: Steel member
- 170:: Side wall
- 180:: Ceiling surface
- 190:: Heater
- 200:: Hanger assembly
- 210:: Supporting member
- 211:: Extension part
- 215:: End part
- 216:: Boundary portion
- 220:: Convex portions
- 230:: Through-holes
- 240:: Supported member
- 242:: Space
- 245:: First end of supported member
- 250:: Through-holes
- 260:: Second end of supported member
- 265:: Hook member
- 280:: Pin
- 310:: Supporting member
- 310A, 310B, 310C:: Supporting member
- 311:: Extension part
- 315:: End part
- 316:: Connecting part
- 317:: Center portion
- 318:: Rib members
- 320:: Convex portions
- 330:: Through-holes
- 342:: Space

## Claims

1. A hanger assembly for hanging up a firebrick that forms a ceiling surface in a float bath roof for an apparatus for producing a float plate glass, which hanger assembly comprises a supporting member, a supported member and a pin latching the supporting member and the supported member, wherein the supporting member has an extension part that extends in extension direction P, an end part formed by two convex portions having through-holes so that when one pin is inserted into the through-hole of one convex portion, the pin passes through the through-hole of the other convex portion, and a connecting part that connects the extension part and the end part, and the connecting part is tapered so that the dimension of at least a portion thereof becomes larger from the boundary with the extension part toward the boundary with the end part.

2. The hanger assembly according to Claim 1, wherein the entire length H of the connecting part represented by the distance between said two boundaries in the extension direction P of the extension part is within a range of from 20mm to 100mm; in the connecting part, the thickness W1 at the boundary with the end part in a direction parallel to the extension direction of the through-holes is within a range of from 20mm to 70mm, and/or the thickness W3 at the boundary with the extension part in a direction parallel to the extension direction of the through-holes is within a range of from 3mm to 30mm; and/or the upper width A1 of the end part in a direction perpendicular to the extension direction of the through-holes is within a range of from 20mm to 70mm; and/or the width A2 of the extension part in a direction perpendicular to the extension direction of the through-holes is within a range of from 3mm to 30mm.

3. The hanger assembly according to Claim 1 or 2, wherein the entire length C of the end part in the extension direction P of the extension part is within a range of from 20mm to 80mm, the length D of the through-holes is within a range of from 3mm to 25mm, and the lower width A3 of the end part is from 20mm to 70mm.

4. The hanger assembly according to any one of Claims 1 to 3, wherein the supporting member is made of a nickel base alloy.

5. The hanger assembly according to Claim 4, wherein the supporting member is cast in a nickel base alloy.

6. The hanger assembly according to any one of Claims 1 to 5, wherein the supported member is made of a silicon carbide material containing silicon carbide as the main component or a silicon nitride material containing silicon nitride as the main component.

7. An apparatus for producing a float plate glass, which comprises a float bath to accommodate molten tin therein, and a float bath roof having a ceiling surface formed by a firebrick hung up by a hanger assembly, wherein the hanger assembly is constituted by the hanger assembly as defined in any one of Claims 1 to 6.
